# EUROPEAN PATENT APPLICATION

(11) **EP 3 363 278 A1**
(43) Date of publication of application: **22.08.2018**
(21) Application number: 18157724.8
(22) Date of filing: 20.02.2018
(51) Int. Cl.: A01D 46/26

(54) **BEATING DEVICE FOR THE HARVESTING OF FRUITS FROM FRUIT TREES**

(30) Priority: 20.02.2017 IT 201700018805; 15.02.2018 IT 201800002697
(71) Applicant: Fedeli, Giancarlo, 06034 Foligno (IT)
(72) Inventor: Fedeli, Giancarlo, 06034 Foligno (IT)
(74) Representative: Giannini, Manuela

(57) **Abstract**

A beating device for the harvesting of fruits from fruit trees has a pair of beating members (5, 6), which are movable between an open position and a closed position under the thrust of an actuating cylinder (7; 57) and are defined by respective rocker arms (33, 34), one of which has an intermediate point hinged to an output rod (13) of the actuating cylinder (7; 57), and a first arm (36) connected to a containment jacket (8) of the actuating cylinder (7; 57) itself by means of a first rod linkage (37) and the other has an intermediate point connected to the containment jacket (8) through a second rod linkage (38) and a first arm (39) hinged to the output rod (13).

## Description

### PRIORITY CLAIM

This application claims priority from Italian Patent Applications No. 102017000018805 filed on February 20, 2017 and No. 102018000002697 filed on February 15, 2018.

### TECHNICAL FIELD

The present invention relates to a beating device for the harvesting of fruits from fruit trees.

The present invention finds particularly advantageous application in the harvesting of olives, to which the following specification will make explicit reference without thereby losing generality.

### STATE OF THE ART

In the field of olive harvesting, the manufacture of a beating device commonly referred to as the "olive harvester" and comprising a tubular support rod and a beating head mounted on the support rod itself is well known.

Generally, the beating head comprises a pair of beating members that are movable between an open position and a closed position for beating the branches of olive trees and facilitating the fall of the olives.

The beating members are moved between their open and closed positions by an actuating cylinder comprising a containment jacket, which has a longitudinal axis inclined at an angle different from 0° with respect to a longitudinal axis of the support rod, and an output rod axially protruding outwards from the containment jacket itself and movable with a rectilinear reciprocating motion.

The beating members are arranged on opposite sides of the longitudinal axis of the containment jacket, each comprising a respective rocker arm, which is hinged at an intermediate point thereof to the containment jacket, has a first arm connected to the output rod of the actuating cylinder by means of a rod linkage, and also has a second comb-shaped arm.

An olive harvester of the type specified above is known, for example, from EP-A1-1488678.

The known olive harvesters are normally operated by electric or pneumatic actuating cylinders.

In particular, as regards the electric actuation, the use of a small rotary electric motor, which is powered by an electric battery or a small generating set and is connected to the output rod through a reduction gear and a connecting rod-crank mechanism adapted to give the output rod a rectilinear reciprocating motion, is well known.

The known electric actuation described above has some drawbacks mainly arising from the fact that the rectilinear reciprocating motion of the output rod takes place at a relatively high frequency (around 1200 cycles per minute) and therefore the gears and the connecting rod-crank mechanism must be lubricated, and must undergo periodic maintenance and, with a certain frequency, replacement of worn components.

On the other hand, as regards the pneumatic actuation, the use of a piston housed in a sliding manner in the containment jacket of the actuating cylinder and directly connected to the output rod in order to give the latter a rectilinear reciprocating motion, is well known.

The piston divides the containment jacket into two variable volume chambers, which can be selectively and alternately connected to an inlet for the inflow of a pressurised fluid into the containment jacket (usually pressurised air supplied along the support rod) and to an outlet for the outflow of the pressurised fluid from the containment jacket itself.

Generally, the two variable volume chambers are separated from each other in a fluid-tight manner by two annular gaskets mounted on the piston coaxial with the longitudinal axis of the containment jacket.

The piston is movable along the containment jacket with a rectilinear reciprocating motion controlled by a valve device mounted on the outside of the actuating cylinder.

The valve device comprises a slide valve that is movable between two operating positions, in each of which one variable volume chamber is connected with the inlet for the inflow of the pressurised fluid into the containment jacket and the other variable volume chamber is connected with the outlet for the outflow of the pressurised fluid from the containment jacket itself.

The slide valve is moved between its operating positions by the pressurised fluid contained in the two variable volume chambers and supplied to the valve device via relevant supply holes obtained through the containment jacket.

Since the beating members, when arranged in their closed position, converge towards each other, the known beating devices of the type described above have some drawbacks mainly arising from the fact that the beating members hit the branches of the olive trees only at their free ends, are incapable of hitting the branches of the olive trees along the entire length of the respective comb-shaped arms, and therefore have a relatively reduced effectiveness.

In addition, since the longitudinal axes of the support rod and the actuating cylinder are arranged at an angle different from 0°, and the support rod has a relatively large length, the known beating devices of the type described above have the additional drawback that the vibrations generated by the reciprocating rectilinear motion of the piston along the containment jacket are transmitted to the free end of the support rod gripped by the operator and therefore entail great fatigue for the operator himself/herself.

Lastly, since the reciprocating rectilinear motion of the piston has a relatively high frequency, the known beating devices of the type described above have the additional drawback that the annular gaskets repeatedly pass through the supply holes of the containment jacket, with consequent damaging and impairment of their correct operation.

### OBJECT OF THE INVENTION

The object of the present invention is to provide a beating device for the harvesting of fruits from fruit trees, which is free from the drawbacks described above, simple and inexpensive to implement.

According to the present invention, a beating device for the harvesting of fruits from fruit trees is provided as claimed in the appended claims.

### BRIEF DESCRIPTION OF THE DRAWINGS

The present invention will now be described with reference to the accompanying drawings, which illustrate a non-limiting embodiment thereof, in which:
Figures 1 and 2 are two schematic perspective views of a preferred embodiment of the beating device of the present invention shown in two different operating positions;
Figures 3 and 4 are two schematic side views, with parts in section and parts removed for clarity, of the beating device of Figures 1 and 2 shown in two different operating positions;
Figure 5 is a schematic longitudinal section, in enlarged scale, of a detail of Figures 3 and 4;
Figure 6 is similar to Figure 5 and shows a first variant of the detail of Figure 5;
Figure 7 is similar to Figure 3 and shows a second variant of the detail of Figure 5;
Figure 8 shows a variant of the beating device of Figure 7.

### PREFERRED EMBODIMENT OF THE INVENTION

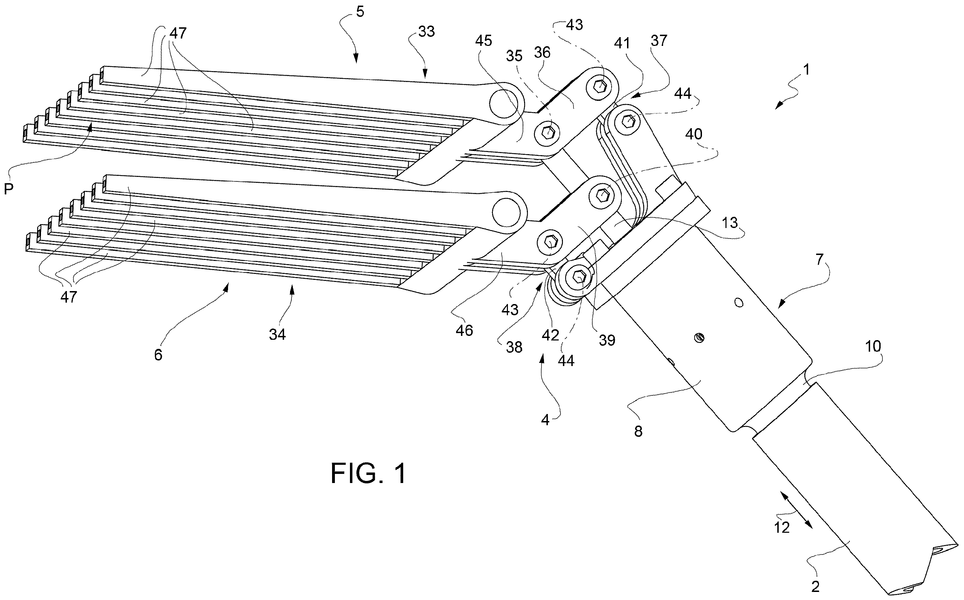

With reference to Figures 1 to 5, 1 indicates, as a whole, a beating device for the harvesting of fruits, in particular olives, from fruit trees, in particular olive trees.

The beating device 1 comprises a tubular support rod 2, which has a longitudinal axis 3 and a relatively large length, is connected to a pneumatic device for supplying compressed air and configured to be gripped by an operator at a first free end thereof (not shown); and a beating head 4 engaged on the rod 2 itself.

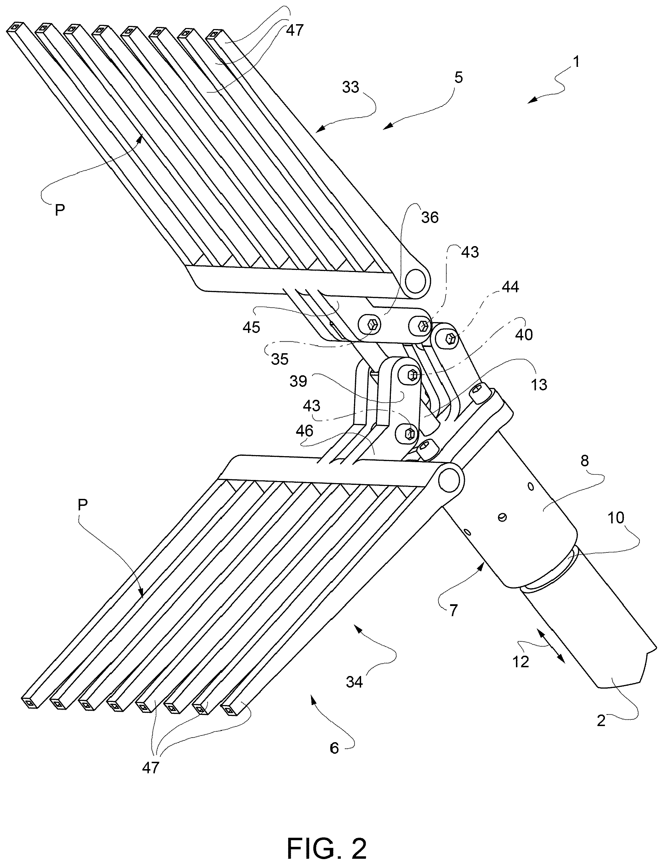

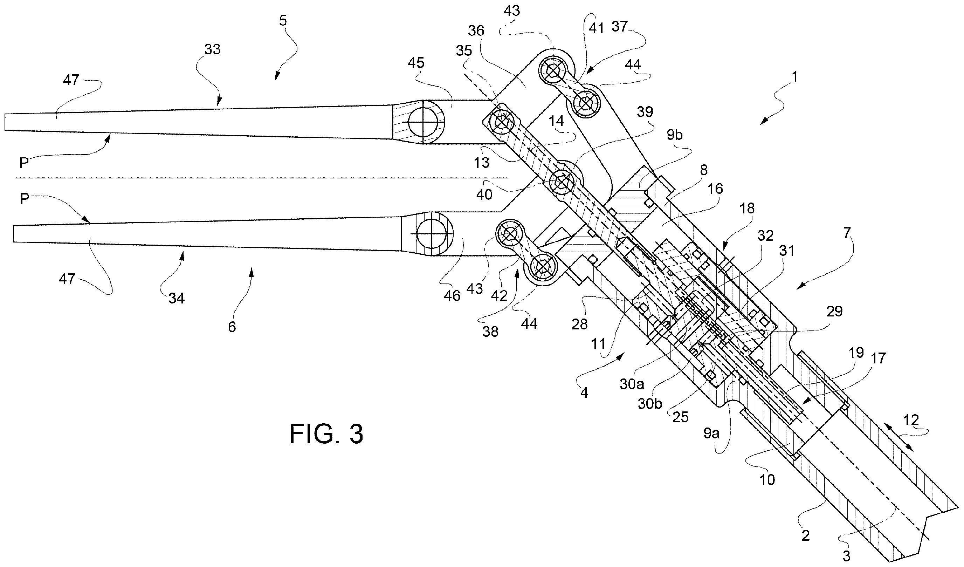

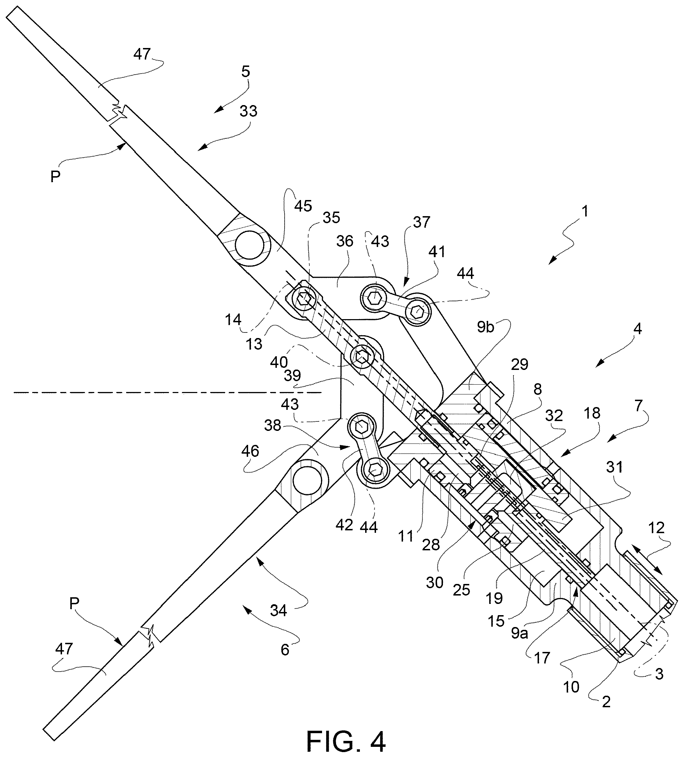

The head 4 comprises a pair of beating members 5, 6, and a pneumatic actuating cylinder 7 for moving the members 5, 6 between a closed position (Figures 1 and 3) and an open position (Figures 2 and 4).

The actuating cylinder 7 comprises a containment jacket 8, which has a cylindrical shape, extends coaxial with the axis 3, and is axially closed by two end walls 9 substantially perpendicular to said axis 3.

The jacket 8 is provided with a projection 10, which protrudes from one of the walls 9 (hereinafter referred to as 9a), and is angularly and axially locked inside a second free end of the rod 2.

The actuating cylinder 7 also comprises a piston 11, which is engaged in a sliding manner in the jacket 8 to perform rectilinear displacements with respect to said jacket 8 itself in a direction 12 parallel to the axis 3, and is provided with an output rod 13.

The rod 13 has a longitudinal axis 14 parallel to and distinct from said axis 3, and axially protrudes outwards from the jacket 8 through the wall 9 (hereinafter referred to as 9b) opposite to the wall 9a.

According to a variant, not shown, the axis 3 and the axis 14 can be parallel and coincident.

The piston 11 divides the jacket 8 into two variable volume chambers 15, 16, which are selectively connectable to an inlet 17 for the inflow of compressed air into the jacket 8, and to an outlet 18 for the outflow of compressed air from said jacket 8.

The inlet 17 is defined by a sleeve 19, which has a longitudinal axis 20 parallel to direction 12, is coupled in an axially fixed manner to the piston 11, extends through the wall 9a, is coupled in a fluid-tight manner to the wall 9a itself, and protrudes inside the rod 2.

The outlet 18 comprises an annular manifold 21, which is formed on the inner surface of the jacket 8 coaxially with the axis 3, and communicates with the external environment through a plurality of radial outlet holes 22, which are evenly distributed about the axis 3, and are formed through the jacket 8 transversely to said axis 3 itself.

The two chambers 15, 16 are selectively connected with the inlet 17 and the outlet 18 by a valve device 23 integrated in the piston 11.

The device 23 comprises a pneumatic circuit 24 comprising, in turn, a first supply duct 25, which is formed through the piston 11, has a first end communicating with the chamber 15, and also has a second end communicating with a hole 26, which is formed through the piston 11 in direction 12, and has a longitudinal axis 27 parallel to said direction 12 itself.

The circuit 24 further comprises a second supply duct 28, which is formed through the piston 11, has a first end communicating with the chamber 16, and also has a second end communicating with the hole 26.

The circuit 24 also has an inlet duct 29 for the inflow of compressed air into the actuating cylinder 7, and an outlet duct 30 for the outflow of compressed air from said actuating cylinder 7.

The duct 29 is formed on the inner surface of the hole 26 parallel to direction 12, communicates with the sleeve 19, and also communicates with the ducts 25 and 28.

The duct 30 comprises a portion 30a, which is formed through the piston 11 transversely to direction 12, extends between the ducts 25 and 28 and communicates with the duct 29, and a portion 30b, which is formed on the outer surface of the piston 11 parallel to direction 12 and radially faces the manifold 21.

The circuit 24 further comprises a switching member 31, which has a cylindrical shape, is mounted inside the hole 26 coaxially with the axis 27, and is coupled in a sliding manner to the piston 11 to perform rectilinear displacements with respect to said piston 11 itself in direction 12.

The member 31 has a length, as measured parallel to direction 12, greater than the length of the piston 11, also as measured parallel to direction 12, and has a coupling duct 32 protruding inside the duct 29 for selectively connecting the portion 30a of the duct 30 with the ducts 25 and 28.

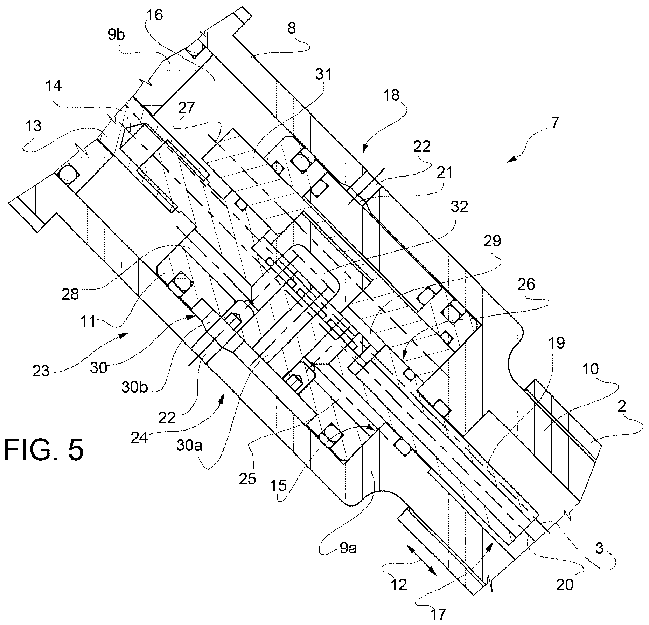

The member 31 is movable, with respect to the piston 11 and according to modes that will be better illustrated hereinafter, between a first operating position (Figures 3 and 5), in which the duct 29 is connected to the duct 25 and the duct 30 is connected to the duct 28 through the duct 32, and a second operating position (Figure 4), in which the duct 29 is connected to the duct 28 and the duct 30 is connected to the duct 25 through the duct 32.

With regard to the foregoing, it should be pointed out that, when the member 31 is in its first operating position, the rod 13 is moved from a retracted position (Figure 3) to an extended position (Figure 4) and that when the member 31 is in its second operating position, the rod 13 is moved from its extended position to its retracted position.

Each member 5, 6 comprises a respective rocker arm 33, 34.

The rocker arm 33 is hinged at an intermediate point thereof to the rod 13 in order to rotate with respect to the rod 13 about a fulcrum axis 35 transverse to direction 12, and has a first arm 36 connected to the jacket 8 through a rod linkage 37.

The rocker arm 34 has an intermediate point connected to the jacket 8 through a rod linkage 38, and is provided with a first arm 39 hinged to the rod 13 in order to rotate with respect to the rod 13 about a fulcrum axis 40 parallel to the axis 35.

Each rod linkage 37, 38 comprises a connecting rod 41, 42 extending between two axes 43, 44 parallel to each other and to the axes 35, 40, of which the axis 43 is the rotation axis of the connecting rod 41, 42 with respect to the corresponding rocker arm 33, 34, and the axis 44 is the rotation axis of the connecting rod 41, 42 with respect to the jacket 8.

Each rocker arm 33, 34 also comprises a second arm 45, 46, which has the shape of a comb, and is provided with a plurality of teeth 47, which are parallel to each other and define a contact plane P for contacting the branches of the olive trees.

With regard to the foregoing, it should be pointed out that:
the shifting of the rod 13 into its extended position entails the shifting of the members 5, 6 into their open position (Figures 2 and 4);
the shifting of the rod 13 into its retracted position entails the shifting of the members 5, 6 into their closed position (Figures 1 and 3); and
the rocker arms 33, 34 are shaped so that the planes P of the arms 45, 46 are substantially parallel to each other when the members 5, 6 are in their closed position (Figures 1 and 3) and diverge from each other when the members 5, 6 are in their open position (Figures 2 and 4) .

The operation of the beating device 1 will now be described with reference to Figures 1 to 5 and starting from a time at which:
the piston 11 is in its retracted position (Figures 1 and 3) ;
the members 5, 6 are in their closed position (Figures 1 and 3); and
the switching member 31 is in its first operating position and axially projects from the piston 11 towards the wall 9b (Figures 3 and 5).

Since the chamber 15 is connected to the rod 2 by means of the sleeve 19, the inlet duct 29 and the supply duct 25, and the chamber 16 is connected with the external environment via the supply duct 28, the coupling duct 32 and the outlet duct 30, the piston 11 is moved by the compressed air supplied into the chamber 15 to its extended position, and the members 5, 6 are moved to their open position (Figure 4).

As a result of the displacement of the piston 11 from its retracted position to its extended position, the member 31 and the piston 11 come successively into contact with the wall 9b, and the member 31 moves into its second operating position (Figure 4).

Since the chamber 16 is connected to the rod 2 by means of the sleeve 19, the inlet duct 29 and the supply duct 28, and the chamber 15 is connected with the external environment via the supply duct 25, the coupling duct 32 and the outlet duct 30, the piston 11 is moved by the compressed air supplied into the chamber 16 to its retracted position, and the members 5, 6 are moved to their closed position (Figures 3 and 5).

As a result of the displacement of the piston 11 from its extended position to its retracted position, the member 31 and the piston 11 come successively into contact with the wall 9a, and the member 31 moves into its first operating position (Figures 3 and 5).

The operating cycle described above is repeated in order to move the members 5, 6 continuously and alternately between their open and closed positions.

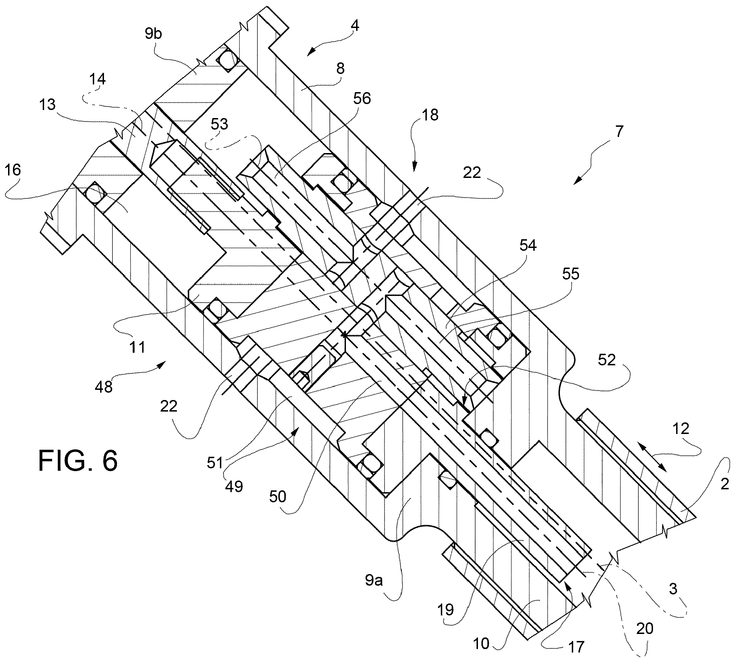

The variant shown in Figure 6 differs from what shown in the preceding figures solely in that, therein, the valve device 23 is removed and replaced with a valve device 48 integrated in the piston 11.

The device 48 comprises a pneumatic circuit 49 comprising, in turn, an inlet duct 50 for the inflow of compressed air into the actuating cylinder 7, and an outlet duct 51 for the outflow of compressed air from said actuating cylinder 7 itself.

The duct 50 is formed through the piston 11, communicates with the sleeve 19, and also communicates with a hole 52, which is formed through the piston 11 in direction 12 and has a longitudinal axis 53 parallel to said direction 12 itself.

The duct 51 has a cylindrical shape, is formed on the outer surface of the piston 11 and communicates with the outlet holes 22 and with the hole 52.

The device 48 further comprises a switching member 54, which has a cylindrical shape, is mounted inside the hole 52 coaxially with the axis 53 and is coupled in a sliding manner to the piston 11 to perform rectilinear displacements with respect to said piston 11 itself in direction 12.

Similarly to the member 31, the member 54 has a length, as measured parallel to direction 12, greater than the length of the piston 11, also as measured parallel to direction 12.

The circuit 49 further comprises a first supply duct 55, which is formed through the member 54, has a first end communicating with the chamber 15, and also has a second end alternately communicating with the duct 50 and the duct 51.

The circuit 49 further comprises a second supply duct 56, which is formed through the member 54, has a first end communicating with the chamber 16, and also has a second end alternately communicating with the duct 50 and the duct 51.

The member 54 is movable, with respect to the piston 11 and according to the same operating modes already described previously for the member 31, between a first operating position (Figure 6), in which the duct 55 is connected to the duct 50 and the duct 56 is connected to the duct 51, and a second operating position (not shown), in which the duct 55 is connected to the duct 51 and the duct 56 is connected to the duct 50.

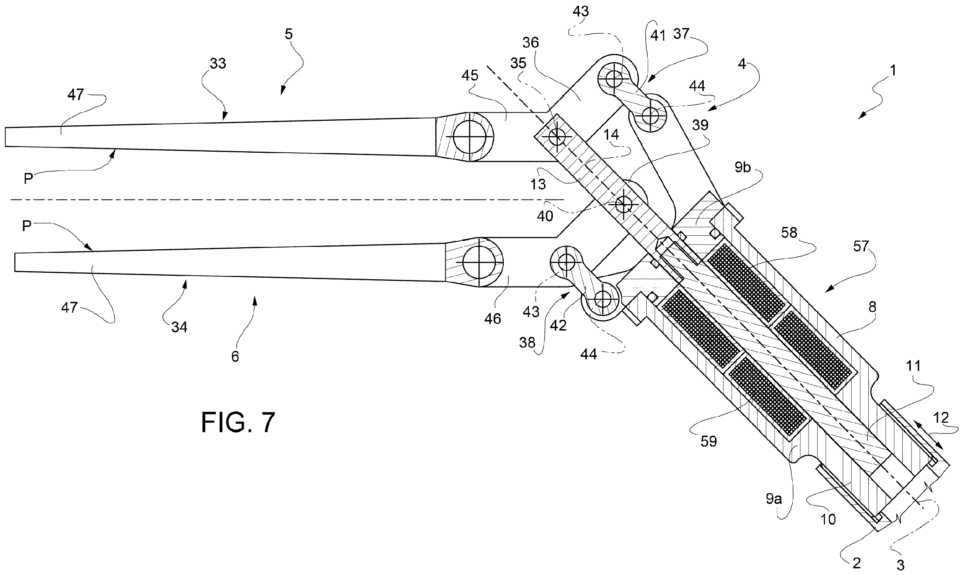

The variant shown in Figure 7 differs from what shown in Figures 1 to 6 solely in that, therein, the pneumatic actuating cylinder 7 is removed and replaced with an electromagnetic actuating cylinder 57, in this case, a linear solenoid.

For this purpose, the actuating cylinder 57 comprises a piston, which is functionally similar to the piston 11 of the actuating cylinder 7 (and therefore referred to in Figure 7 with the same reference number) and is connected to the rod 13, and an electric winding arranged around the piston and connected to an electric power supply.

Preferably, the electric winding comprises two coils, of which a first coil 58 is electrically powered to move the piston 11 from its retracted position to its extended position, and a second coil 59 is electrically powered to move the piston 11 from its extended position to its retracted position, so as to achieve double-acting operation.

According to a variant, not shown, the electric winding comprises a single coil, which can be a spring return coil or a coil connected to a switching electric power supply in order to alternate the direction of movement of the piston 11. Preferably, in the latter case the piston 11 is made of a permanent magnet material characterised by a positive pole and a negative pole arranged along the axis of the piston 11. Alternatively, the piston 11 of the linear solenoid, as well as the components around the coils, can be made of ferromagnetic materials with a very narrow hysteresis loop (for example, silicon-iron alloys), so that it can be magnetized and demagnetized completely.

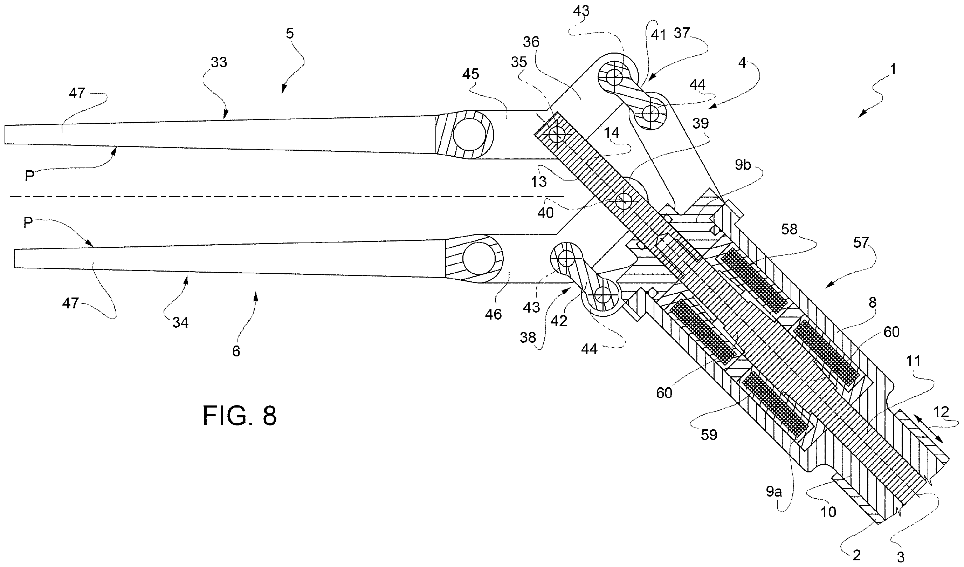

The variant shown in Figure 8 differs from what shown in Figure 7 solely in the conformation of the piston 11, which enables longer strokes and greater force with respect to the example of Figure 7. In particular, the piston 11 has, centrally, two frustoconical portions 60 opposite each other, each of which is adapted to couple to a respective frustoconical seat formed in the jacket 8 and arranged approximately at the centre of a corresponding coil 58 or 59. With this conformation of the piston 11, all other features being the same, the larger the diameter of the piston 11, the greater the force developed by the linear solenoid.

In the case where the linear solenoid comprises a single coil, the piston 11 will only have one frustoconical portion, and accordingly only one frustoconical seat arranged approximately at the centre of the coil.

According to a variant, not shown, the solenoid electric actuator can be arranged, for reasons of weight distribution and balancing, at the other end of the support rod 2; in this case, the piston 13 will have approximately the same length as the support rod 2 and will be suitably guided inside the support rod 2 itself.

The beating device 1 has several advantages mainly due to the fact that the contact planes P are substantially parallel to each other when the beating members 5, 6 are in their closed position, allowing the arms 45, 46 to hit the branches of the olive trees along the entire length of the respective teeth 47.

Moreover, since the support rod 2 and the actuating cylinders 7, 57 have the same longitudinal axis 3, the vibrations generated by the reciprocating rectilinear motion of the piston 11 along the containment jacket 8 entail a relatively reduced fatigue for the operator.

The beating device provided with the solenoid electric actuator has some advantages mainly arising from the fact that the movable part is represented by the piston 11 alone, which requires no maintenance and therefore exhibits very high reliability.

## Claims

1. A beating device for the harvesting of fruits from fruit trees, the beating device comprising a support rod (2) having a first longitudinal axis (3); and a beating head (4) mounted on the support rod (2) itself; the beating head (4) comprising, in turn, a pair of beating members (5, 6) for beating the branches of a fruit tree, and an actuating cylinder (7; 57) to move the beating members (5, 6) between an open position and a closed position; the actuating cylinder (7; 57) comprising a containment jacket (8) and a piston (11), which is engaged in a sliding manner in the containment jacket (8), and has an output rod (13) protruding outwards from the containment jacket (8) itself; the output rod (13) having a second longitudinal axis (14) parallel to the first longitudinal axis (3) and each beating member (5, 6) comprising a rocker arm (33, 34); **characterised in that** a first said rocker arm (33) has an intermediate point hinged to the output rod (13) and a first arm (36) connected to the containment jacket (8) by means of a first rod linkage (37), and a second said rocker arm (34) has an intermediate point connected to the containment jacket (8) through a second rod linkage (38) and a first arm (39) hinged to the output rod (13).

2. The beating device according to claim 1, wherein each said rod linkage (37, 38) comprises a connecting rod (41, 42) which extends between two rotation axes (43, 44) one of which is the rotation axis between the connecting rod (41, 42) and its beating member (5, 6) and the other is the rotation axis between the connecting rod (41, 42) and the containment jacket (8).

3. The beating device according to claim 1 or 2, wherein each rocker arm (33, 34) has a second arm (45, 46) defining a contact plane (P) for contacting the branches of the fruit tree; the contact planes (P) of the two beating members (5, 6) being substantially parallel to one another when the beating members (5, 6) are placed in their closed position.

4. The beating device according to claim 3, wherein the second arm (45, 46) of each rocker arm (33, 34) has the shape of a comb provided with a plurality of teeth (47) defining the respective contact plane (P).

5. The beating device according to any of the preceding claims, wherein the containment jacket (8) is divided by the piston (11) into two variable volume chambers (15, 16), which are selectively connectable to an inlet (17) for the inflow of a pressurised fluid into the containment jacket (8) and to an outlet (18) for the outflow of the pressurised fluid from the containment jacket (8) itself.

6. The beating device according to claim 5, wherein the actuating cylinder (7) further comprises a valve device (23; 48) for selectively connecting each variable volume chamber (15, 16) to said inlet (17) and outlet (18).

7. The beating device according to claim 6, wherein the valve device (23; 48) is integrated in the piston (11).

8. The beating device according to claim 6 or 7, wherein the valve device (23; 48) comprises a pneumatic circuit (24; 49) comprising, in turn, a first supply duct (25; 55) connected to one of the two variable volume chambers (15, 16), a second supply duct (28; 56) connected to the other variable volume chamber (15, 16), an inlet duct (29; 50) for the inflow of the pressurised fluid into the actuating cylinder (7), an outlet duct (30; 51) for the outflow of the pressurised fluid from the actuating cylinder (7), and a switching member (31; 54) that is movable between a first operating position, in which the inlet duct (29; 50) is connected to the first supply duct (25; 55) and the outlet duct (30; 51) is connected to the second supply duct (28; 56), and a second operating position, in which the inlet duct (29; 50) is connected to the second supply duct (28; 56) and the outlet duct (30; 51) is connected to the first supply duct (25; 55).

9. The beating device according to claim 8, wherein the switching member (31; 54) is engaged in a sliding manner through the piston (11) to move, relative to the piston (11) itself, parallel to said first and second longitudinal axes (3, 14) between said first and second operating positions.

10. The beating device according to claim 8 or 9, wherein the switching member (31; 54) has a length, as measured parallel to said first and second longitudinal axes (3, 14), greater than the length of the piston (11), also as measured parallel to said first and second longitudinal axes (3, 14).

11. The beating device according to any one of the claims 8 to 10, wherein the inlet duct (29; 50) and the outlet duct (30; 51) are obtained in the piston (11).

12. The beating device according to any one of the claims 8 to 11, wherein the first supply duct (25) and the second supply duct (28) are obtained through the piston (11); the switching member (31) having a coupling duct (32) for connecting the outlet duct (30) with the second supply duct (28) when the switching member (31) is placed in its first operating position and with the first supply duct (25) when the switching member (31) is placed in its second operating position.

13. The beating device according to any one of the claims 8 to 11, wherein the first supply duct (55) and the second supply duct (56) are obtained through the switching member (54).

14. The beating device according to any one of the claims 1 to 4, wherein the actuating cylinder (57) comprises an electromagnetic actuator for moving the piston (11) parallel to said first and second longitudinal axes (3, 14) between an extended position and a retracted position.

15. The beating device according to claim 14, wherein the electromagnetic actuator comprises a first coil (58) electrically powered to move the piston (11) from its retracted position to its extended position, and a second coil (59) electrically powered to move the piston (11) from its extended position to its retracted position.
